# EUROPEAN PATENT APPLICATION

(11) **EP 4 772 848 A1**
(43) Date of publication of application: **08.07.2026**
(21) Application number: 25225750.6
(22) Date of filing: 19.12.2025
(51) Int. Cl.: G01L 3/08, F02C 7/36, G01L 3/10

(54) **LUGS REFERENCE-BASED TORQUEMETER CONTROLLER BY HELICAL SPLINE AXIAL FORCE RETENTION**

(30) Priority: 19.12.2024 US 202418987567
(71) Applicant: Pratt & Whitney Canada Corp., (01BE5) Longueuil, QC J4G 1A1 (CA)
(72) Inventor: ROZPUTYNSKI, Tomasz, (01BE5) Longueuil, J4G 1A1 (CA)
(74) Representative: Dehns

(57) **Abstract**

A torque measurement system (201) is provided and includes a first shaft (210) to rotate by input torque, a second shaft (220) to rotate by torque received from the first shaft, the second shaft including first lugs (221), a reference shaft (230) including second lugs (231) and being connected to the first and second shafts via spline and helical spline connections (232, 233), respectively, an elastic element (240) to oppose a reaction force of the helical spline connection to axially displace the reference shaft resulting in reference shaft twisting due to the helical spline connection and a measurement system (250) to measure angular displacement between the first and second lugs due to the reference shaft twisting.

## Description

### BACKGROUND

The present disclosure relates to gas turbine engines and, in particular, to a gear pump parallel load path of a gas turbine engine of an aircraft.

In a gas turbine engine, fuel and compressed air are combusted in a combustor to produce a high-temperature and high-pressure fluid. This fluid enters a turbine and interacts with rows or stages of turbine blades and vanes. The interaction between the high-temperature and high-pressure fluid with the turbine blades and vanes causes the stages of turbine blades to rotate a shaft. The shaft rotation drives a compressor to compress the air for the combustor and, as noted above, can be used to drive operations of a generator to produce electricity and/or for propulsion. Besides gas turbine engines, other types of engines of aircraft propulsion systems are available. These include, but are not limited to, electrical engines and hybrid engines. In any case, a gearbox is typically interposed between the engine or power source and a component to be powered, such as a propeller. The gearbox drives the components at a required speed and carries resulting torque and loads.

### SUMMARY

According to an aspect of the disclosure, a torque measurement system is provided and includes a first shaft to rotate by input torque, a second shaft to rotate by torque received from the first shaft, the second shaft including first lugs, a reference shaft including second lugs and being connected to the first and second shafts via spline and helical spline connections, respectively, an elastic element to oppose a reaction force of the helical spline connection to axially displace the reference shaft resulting in reference shaft twisting due to the helical spline connection and a measurement system to measure angular displacement between the first and second lugs due to the reference shaft twisting.

In a further embodiment of the previous embodiment, the torque measurement system further includes first and second sets of bearings to support first and second shaft rotations, respectively, and third and fourth sets of bearings to support the reference shaft within the first and second shafts, respectively.

In a further embodiment of any of the previous embodiments, the first and second lugs are at least partially coaxial at respective ends of the second shaft and the reference shaft.

In a further embodiment of any of the previous embodiments, the measurement system includes a lug reference measurement system that measures the angular displacement between the first and second lugs by at least one of optical and electromagnetic measurement.

In a further embodiment of any of the previous embodiments, the elastic element includes a compression spring.

In a further embodiment of any of the previous embodiments, the reaction force of the helical spline connection is directed away from the first and second lugs and a spring force of the elastic element is directed toward the first and second lugs.

In a further embodiment of any of the previous embodiments, the helical spline connection has a 5-45 degree spline angle and a 0.25-20.00 inch pitch diameter.

In a further embodiment of any of the previous embodiments, the helical spline connection has a 20 degree spline angle and a two inch pitch diameter.

In a further embodiment of any of the previous embodiments, the torque measurement system further includes a locking element to limit an axial displacement of the reference shaft.

According to an aspect of the disclosure, a torque measurement system of a gearbox of an aircraft gas turbine engine is provided and includes an input shaft to rotate about a rotational axis by input torque, an output shaft to rotate about the rotational axis by torque received from the input shaft, the output shaft including first lugs, a reference shaft including\ second lugs and being connected to the input and output shafts via spline and helical spline connections, respectively, an elastic element to oppose a reaction force of the helical spline connection to axially displace the reference shaft resulting in reference shaft twisting due to the helical spline connection and a measurement system to measure angular displacement between the first and second lugs due to the reference shaft twisting.

In a further embodiment of any of the previous embodiments, the torque measurement system further includes first and second sets of bearings to support input and output shaft rotations, respectively, and third and fourth sets of bearings to support the reference shaft within the input and output shafts, respectively.

In a further embodiment of any of the previous embodiments, the first and second lugs are at least partially coaxial at respective ends of the output shaft and the reference shaft.

In a further embodiment of any of the previous embodiments, the measurement system includes a lug reference measurement system that measures the angular displacement between the first and second lugs by at least one of optical and electromagnetic measurement.

In a further embodiment of any of the previous embodiments, the elastic element includes a compression spring.

In a further embodiment of any of the previous embodiments, the reaction force of the helical spline connection is directed away from the first and second lugs and a spring force of the elastic element is directed toward the first and second lugs.

In a further embodiment of any of the previous embodiments, the helical spline connection has a 5-45 degree spline angle and a 0.25-20.00 inch pitch diameter.

In a further embodiment of any of the previous embodiments, the helical spline connection has a 20 degree spline angle and a two inch pitch diameter.

In a further embodiment of any of the previous embodiments, the torque measurement system further includes a locking element to limit an axial displacement of the reference shaft.

According to an aspect of the disclosure, a method of torque measurement of a gearbox of an aircraft gas turbine engine is provided. The method includes rotating an input shaft about a rotational axis by input torque, rotating an output shaft about the rotational axis by torque received from the input shaft, connecting a reference shaft to the input and output shafts via spline and helical spline connections, respectively, opposing a reaction force of the helical spline connection by an elastic element to axially displace the reference shaft resulting in reference shaft twisting due to the helical spline connection and measuring angular displacement between first and second lugs of the output shaft and the reference shaft, respectively, due to the reference shaft twisting.

In a further embodiment of any of the previous embodiments, the method further includes at least one of adjusting a stiffness of the elastic element to adjust an axial displacement of the reference shaft and adjusting at least one of a spline angle and a pitch diameter of the helical spline connection to adjust the angular displacement.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a cross-sectional view of a prior art turboshaft engine;
FIG. 2 is a side view of a torque measurement system of a gearbox of an aircraft gas engine turbine in accordance with embodiments;
FIG. 3 is a perspective view of components of the torque measurement system of FIG. 2 illustrating a relationship between axial and angular displacements in accordance with embodiments; and
FIG. 4 is a flow diagram illustrating a method of torque measurement of a gearbox of an aircraft gas turbine engine in accordance with embodiments.

### DETAILED DESCRIPTION

The following disclosure is applicable to any type of gas turbine engine, including, but not limited to, turbofans, turboshafts, turboprops, turbojets, electrical drives, hybrid drives, etc. The gas turbine engine described below is provided by way of example, and should not be interpreted as limiting the scope of the application or the claims in any way.

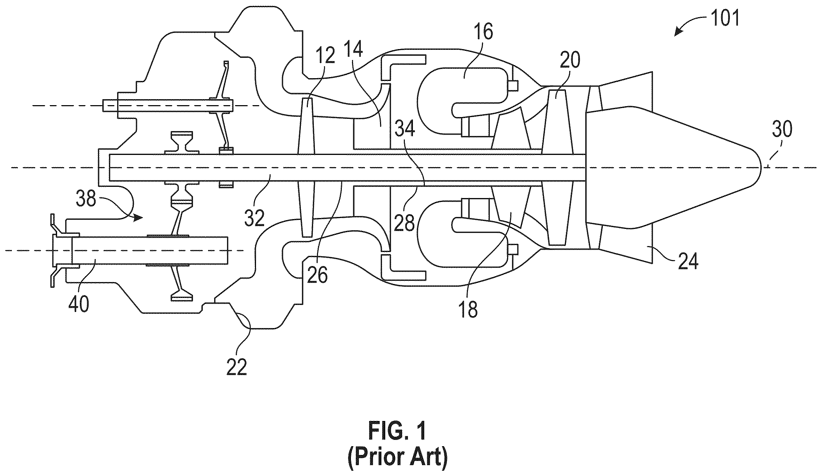

With reference to FIG. 1, a turboshaft engine 101 is provided and configured as a gas turbine engine. In particular, the turboshaft engine 101 is a generally conventional turboshaft engine generally including, in serial flow communication, a low pressure (LP) compressor section 12 and a high pressure (HP) compressor section 14 for pressurizing air, a combustor 16 in which the compressed air is mixed with fuel and ignited for generating an annular stream of hot combustion gases, a high pressure turbine section 18 for extracting energy from the combustion gases and driving the high pressure compressor section 14 and a lower pressure turbine section 20 for further extracting energy from the combustion gases and driving at least the low pressure compressor section 12.

The low pressure compressor section 12 may independently rotate from the high pressure compressor section 14. The low pressure compressor section 12 may include one or more compression stages and the high pressure compressor section 14 may include one or more compression stages. A compressor stage may include a compressor rotor, or a combination of the compressor rotor and a compressor stator assembly. In a multistage compressor configuration, the compressor stator assemblies may direct the air from one compressor rotor to the next.

The turboshaft engine 101 has multiple, i.e. two or more, spools which may perform the compression to pressurize the air received through an air inlet 22, and which extract energy from the combustion gases before they exit via an exhaust outlet 24. For example, the turboshaft engine 101 can include a low pressure spool 26 and a high pressure spool 28 mounted for rotation about an engine axis 30. The low pressure and high pressure spools 26, 28 are independently rotatable relative to each other about the axis 30. The term "spool" is herein intended to broadly refer to drivingly connected turbine and compressor rotors.

The low pressure spool 26 includes a low pressure shaft 32 interconnecting the low pressure turbine section 20 with the low pressure compressor section 12 to drive rotors of the low pressure compressor section 12. In other words, the low pressure compressor section 12 may include at least one low pressure compressor rotor directly drivingly engaged to the low pressure shaft 32 and the low pressure turbine section 20 may include at least one low pressure turbine rotor directly drivingly engaged to the low pressure shaft 32 so as to rotate the low pressure compressor section 12 at a same speed as the low pressure turbine section 20. The high pressure spool 28 includes a high pressure shaft 34 interconnecting the high pressure turbine section 18 with the high pressure compressor section 14 to drive rotors of the high pressure compressor section 14. In other words, the high pressure compressor section 14 may include at least one high pressure compressor rotor directly drivingly engaged to the high pressure shaft 34 and the high pressure turbine section 18 may include at least one high pressure turbine rotor directly drivingly engaged to the high pressure shaft 34 so as to rotate the high pressure compressor section 14 at a same speed as the high pressure turbine section 18. In some embodiments, the high pressure shaft 34 may be hollow and the low pressure shaft 32 extends therethrough. The two shafts 32, 34 are free to rotate independently from one another.

The turboshaft engine 101 may further include a transmission 38 driven by the low pressure shaft 32 and driving a rotatable output shaft 40. The transmission 38 may vary a ratio between rotational speeds of the low pressure shaft 32 and the output shaft 40.

In a gearbox of a turboshaft engine, such as the turboshaft engine 101 of FIG. 1, torque values are measured by a twisting of a torque shaft. Twisting of the torque shaft is related to the transmitted torque, length/diameters of the torque shaft twist area and its material properties and is measured by reference to lug misalignment at the end of the torque shaft and a corresponding end of a reference shaft. In some cases, when there is insufficient torque shaft length, a generated mismatch or misalignment of the lugs is too low to be precisely detected (e.g., by a sensor).

A need therefore exists for improvements to the gearbox torque measurement systems that allow for precise measurement of torque exhibited by twisting of the torque shaft even where misalignment of the lugs may otherwise be insufficient for the precise measurement.

Thus, as will be described below, an engine torque measurement system for a gearbox of a gas turbine engine, such as a gas turbine engine of an aircraft, is provided. The engine torque measuring system uses a helical spline connection that is suitable for the gearbox given that the available space in the gearbox is limited (and can be too small for the conventional torque shaft, which needs a minimum length for twisting and measuring of the transferring torque). Measured torque is transferred by the helical spline connection. This helical spline connection generates an axial force that is reacted by an elastic element or a spring. A resultant force between a spline reaction force and spring stiffness causes a reference shaft to move axially. The axial displacement of the reference shaft results in twist around its axis of rotation due to the helical spline connection. This way, angular displacement of the reference lugs of the torque shaft and the reference shaft is achieved. The axial displacement can be controlled by the spring stiffness with the understanding that specific axial displacement will generate specific angular displacement depending on the spline helix angle. A measured torque value would be the difference of the angular position between output torque shaft lugs and reference shaft lugs.

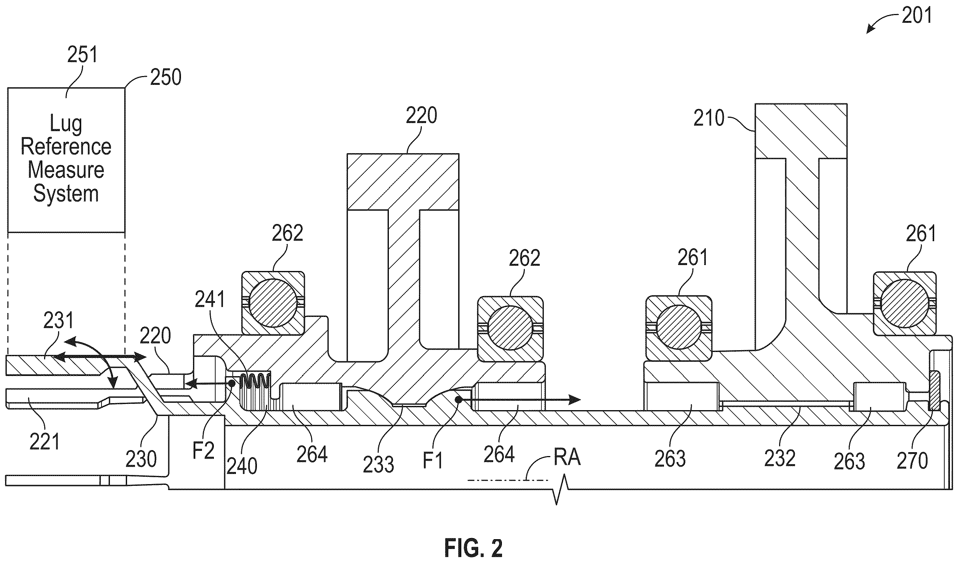

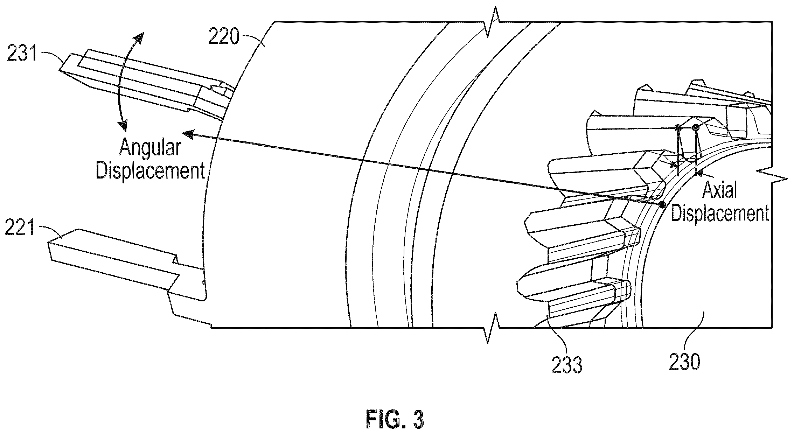

With reference to FIGS. 2 and 3, a torque measurement system 201 of a gearbox of an aircraft gas turbine engine, such as the turboshaft engine 101 of FIG. 1, is provided. The torque measurement system 201 includes a first or input shaft 210 (hereinafter referred to as an "input shaft 210") to rotate about a rotational axis RA by input torque applied thereto and a second or output shaft 220 (hereinafter referred to as an "output shaft 220") to rotate about the rotational axis RA by torque received from the input shaft 210. The output shaft 220 includes first lugs 221 at an end thereof. The torque measurement system 201 further includes a reference shaft 230 including second lugs 231, an elastic element 240, such as a compression spring 241, and a measurement system 250.

The torque measurement system 201 further includes first and second sets of bearings 261, 262 to support rotations of the input shaft 210 and the output shaft 220, respectively, relative to a housing as well as third and fourth sets of bearings 263, 264 to support the reference shaft 230 within the input shaft 210 and the output shaft 220, respectively.

The reference shaft 230 includes the second lugs 231 at an end thereof such that the second lugs 231 positionally correspond with the first lugs 221 and such that the first lugs 221 and the second lugs 231 at least partially coaxially overlap with each other. The reference shaft 230 is connected to the input shaft 210 via a spline connection 232 whereby torque is transferred to the reference shaft 230 from the input shaft 210 without axial force generation. The reference shaft 230 is connected to the output shaft 220 via a helical spline connection 233 whereby torque is transferred to the reference shaft 230 from the output shaft 220 with axial force generation due to a reaction force F1 of the helical spline connection 233, which is directed away from the first lugs 221 and the second lugs 231. The elastic element 240 is disposed to apply a spring force F2 directed toward the first lugs 221 and the second lugs 231 in opposition to the reaction force F1 of the helical spline connection 233 to axially displace the reference shaft 230 resulting in twisting of the reference shaft 230 due to the helical spline connection 233.

The torque measurement system 201 can further include a locking element 270 that is disposed to limit an axial displacement of the reference shaft 230.

The measurement system 250 is configured to measure angular displacement (see FIG. 3) between the first lugs 221 and the second lugs 231 due to axial displacement of the reference shaft 230 and the resulting twisting of the reference shaft 230. The measurement system 250 can include a lug reference measurement system 251 that is configured to measure the angular displacement between the first lugs 221 and the second lugs 231 by at least one of optical and electromagnetic measurement.

In accordance with embodiments, the helical spline connection 233 can have a 5-45 degree spline angle and a 0.25-20.00 inch (6.35-508 mm) pitch diameter. In accordance with further embodiments, the helical spline connection 233 can have a 20 degree spline angle and a two inch (5 cm) pitch diameter.

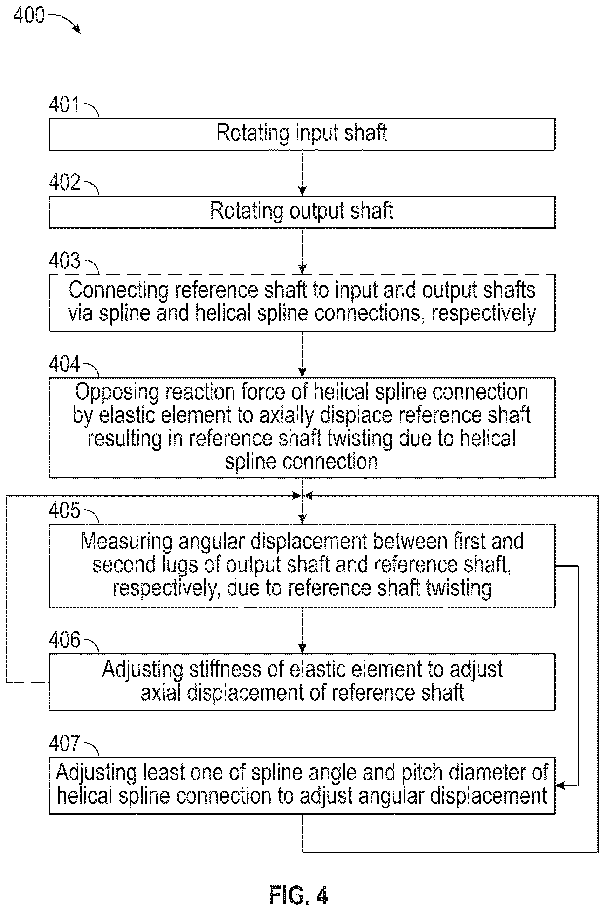

With reference to FIG. 4, a method 400 of torque measurement of a gearbox of an aircraft gas turbine engine is provided. The method 400 can be executed by the torque measurement system 201 of FIGS. 2 and 3 and includes rotating an input shaft about a rotational axis by input torque (block 401), rotating an output shaft about the rotational axis by torque received from the input shaft (block 402), connecting a reference shaft to the input and output shafts via spline and helical spline connections, respectively (block 403), opposing a reaction force of the helical spline connection by an elastic element to axially displace the reference shaft resulting in reference shaft twisting due to the helical spline connection (block 404) and measuring angular displacement between first and second lugs of the output shaft and the reference shaft, respectively, due to the reference shaft twisting (block 405). The method 400 can further include at least one of adjusting a stiffness of the elastic element to adjust an axial displacement of the reference shaft (block 406) and adjusting at least one of a spline angle and a pitch diameter of the helical spline connection to adjust the angular displacement (block 407).

Technical effects and benefits of the present disclosure are the provision of an engine torque measurement system for a gearbox of a gas turbine engine, such as a gas turbine engine of an aircraft, is provided. The engine torque measuring system uses a helical spline connection that is suitable for the gearbox given that the available space in the gearbox is limited (and can be too small for the conventional torque shaft, which needs a minimum length for twisting and measuring of the transferring torque).

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A torque measurement system (201), comprising:
a first shaft (210) to rotate by input torque;
a second shaft (220) to rotate by torque received from the first shaft, the second shaft comprising first lugs (221);
a reference shaft (230) comprising second lugs (231) and being connected to the first and second shafts via spline and helical spline connections (232, 233), respectively;
an elastic element (240) to oppose a reaction force of the helical spline connection to axially displace the reference shaft resulting in reference shaft twisting due to the helical spline connection; and
a measurement system (250) to measure angular displacement between the first and second lugs due to the reference shaft twisting.

2. The torque measurement system according to claim 1, further comprising:
first and second sets of bearings (261, 262) to support first and second shaft rotations, respectively; and
third and fourth sets of bearings (263, 264) to support the reference shaft within the first and second shafts, respectively.

3. The torque measurement system according to claim 1 or 2, wherein the first and second lugs are at least partially coaxial at respective ends of the second shaft and the reference shaft.

4. The torque measurement system according to claim 1, 2 or 3, wherein the measurement system comprises a lug reference measurement system that measures the angular displacement between the first and second lugs by at least one of optical and electromagnetic measurement.

5. The torque measurement system according to any preceding claim, wherein the elastic element comprises a compression spring (241).

6. The torque measurement system according to any preceding claim, wherein the reaction force of the helical spline connection is directed away from the first and second lugs and a spring force of the elastic element is directed toward the first and second lugs.

7. The torque measurement system according to any preceding claim, wherein the helical spline connection has a 5-45 degree spline angle and a 0.25-20.00 inch (6.35-508 mm) pitch diameter.

8. The torque measurement system according to any preceding claim, wherein the helical spline connection has a 20 degree spline angle and a two inch (5 cm) pitch diameter.

9. The torque measurement system according to any preceding claim, further comprising a locking element (270) to limit an axial displacement of the reference shaft.

10. The torque measurement system of any preceding claim, wherein the torque measurement system is a torque measurement system of a gearbox of an aircraft gas turbine engine, the first shaft is an input shaft to rotate about a rotational axis by the input torque, the second shaft is an output shaft to rotate about the rotational axis by the torque received from the input shaft.

11. A method of torque measurement of a gearbox of an aircraft gas turbine engine, the method comprising:
rotating an input shaft (210) about a rotational axis by input torque;
rotating an output shaft (220) about the rotational axis by torque received from the input shaft;
connecting a reference shaft (230) to the input and output shafts via spline and helical spline connections (232, 233), respectively;
opposing a reaction force of the helical spline connection by an elastic element (240) to axially displace the reference shaft resulting in reference shaft twisting due to the helical spline connection; and
measuring angular displacement between first and second lugs of the output shaft and the reference shaft, respectively, due to the reference shaft twisting.

12. The method according to claim 11, further comprising at least one of:
adjusting a stiffness of the elastic element to adjust an axial displacement of the reference shaft; and
adjusting at least one of a spline angle and a pitch diameter of the helical spline connection to adjust the angular displacement.
